(19) Europäisches Patentamt
European Patent Office
Office européen des brevets

(11) **EP 3 751 238 A1**

(12) **EUROPEAN PATENT APPLICATION**
published in accordance with Art. 153(4) EPC

(43) Date of publication:
**16.12.2020 Bulletin 2020/51**

(51) Int Cl.:
***G01F 1/66*** *(2006.01)*

(21) Application number: **19914208.4**

(22) Date of filing: **15.03.2019**

(86) International application number:
**PCT/CN2019/078254**

(87) International publication number:
**WO 2020/186383 (24.09.2020 Gazette 2020/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SHENZHEN GOODIX TECHNOLOGY CO., LTD.**
**Shenzhen, Guangdong 518045 (CN)**

(72) Inventor: **The designation of the inventor has not yet been filed**

(74) Representative: **Padial Martinez, Ana Belen**
**Arochi & Lindner**
**C/ Gurtubay № 6-3º Izquierda**
**28001 Madrid (ES)**

(54) **CORRECTION CIRCUIT AND RELATED SIGNAL PROCESSING CIRCUIT, AND CHIP**

(57) The application discloses a calibration circuit (140), and the calibration circuit includes: a delay module (180), configured to generate a pre-determined delayed reference signal; a first window function module (101), configured to convert a reference signal into a converted reference signal; a second window function module (102), configured to convert a delayed reference signal into a converted delayed reference signal; a third window function module (103), configured to convert the pre-determined delayed reference signal into a converted pre-determined delayed reference signal; a first delay time computation module, generating a first delay time to be calibrated by receiving the converted reference signal and the converted delayed reference signal; a second delay time computation module, generating a second delay time to be calibrated by receiving the converted reference signal and the converted pre-determined delayed reference signal; and a computation module (190), configured to compute a gain coefficient based on the first delay time to be calibrated and the second delay time to be calibrated.

140

FIG. 5

EP 3 751 238 A1

# Description

## TECHNICAL FIELD

The present application relates to a calibration circuit; in particular, to a calibration circuit of a signal processing circuit and an associated signal processing circuit and chip.

## BACKGROUND

In the application of an ultrasonic flow meter, the flow rate must be derived by measuring the flow speed of the fluid, and the most important measurement parameter for measuring the flow speed is the delay time of the ultrasonic wave in the fluid. There is a relatively significant error in the existing technology for measuring the delay time, and therefore it is not feasible to obtain a high-precision delay time. In view of the foregoing, further improvements and innovations are needed to address this situation.

## SUMMARY OF THE INVENTION

One purpose of the present application is to disclose a calibration circuit; in particular, a calibration circuit of a signal processing circuit and a related signal processing circuit and chip, to address the above-mentioned issue.

One embodiment of the present application discloses a calibration circuit, which is configured to generate a gain coefficient by receiving a reference signal and a delayed reference signal, wherein the delayed reference signal is generated from delaying the reference signal by a first delay time, this embodiment is characterized in that the calibration circuit comprises: a delay module, configured to adjust the delayed reference signal into a default delayed reference signal based on a pre-determined second delay time; a first window function module, configured to convert the reference signal into a first converted reference signal according to window function; a second window function module, configured to convert the delayed reference signal into a first converted delayed reference signal according to the window function; a third window function module, configured to convert the pre-determined delayed reference signal into a converted pre-determined delayed reference signal according to the window function; a first delay time computation module, generating a first delay time to be calibrated by receiving the first converted reference signal and the first converted delayed reference signal, wherein there is a first delay error between the first delay time to be calibrated and the first delay time; a second delay time computation module, generating a second delay time to be calibrated by receiving the first converted reference signal and the converted pre-determined delayed reference signal; and a computation module, configured to compute the gain coefficient based on the first delay time to be calibrated and the second delay time to be calibrated.

One embodiment of the present application discloses a signal processing circuit, wherein the signal processing circuit comprises: the above-mentioned calibration circuit; and a delay time calibration module, coupled to the calibration circuit, and is configured to generate the first delay time according to the first delay time to be calibrated and the gain coefficient.

One embodiment of the present application discloses a signal processing circuit, wherein the signal processing circuit comprises: a fourth window function module, configured to convert the reference signal into a second converted reference signal according to the window function; a fifth window function module, configured to convert the delayed reference signal into a second converted delayed reference signal according to the window function; a third delay time computation module, generating a third delay time to be calibrated by receiving the second converted reference signal and the second converted delayed reference signal, wherein there is a third delay error between the third delay time to be calibrated and the first delay time; the above-mentioned calibration circuit; and a delay time calibration module, coupled to the third delay time computation module, and configured to generate the first delay time according to the third delay time to be calibrated and the gain coefficient.

One embodiment of the present application discloses a chip. The chip comprises the above-mentioned calibration circuit.

One embodiment of the present application discloses a chip. The chip comprises the above-mentioned signal processing circuit.

The signal processing circuit disclosed in the present application includes the window function module. Because of the incorporation of the window function module, the first delay time to be calibrated generated by the signal processing circuit generate is characterized in that the ratio of the first delay error to the first delay time to be calibrated is substantially a fixed value. In view of the feature that the ratio is substantially a fixed value, it is feasible to use the calibration circuit to generate the gain coefficient corelated to the ratio, and then correct the first delay time to be calibrated according to the gain coefficient, thereby generating the calibrated delay time. When the calibrated delay time changes, the delay error of the calibrated delay time is substantially kept at zero or close to zero. In this way, the calibrated delay time can reflect the first delay time in a relatively precise way no matter the level of the delay of the first delay time. Therefore, the calibrated delay time has a relatively higher accuracy.

## BRIEF DESCRIPTION OF THE DRAWINGS

FIG. 1 shows the waveforms in the case where the end-point of the signal envelope of the reference signal and the delayed signal is a non-zero value.

FIG. 2 is a schematic simulation diagram illustrating the relationship between the delay error and the delay time, wherein the delay error is obtained by performing a cross-correlation calculation directly on the reference signal and the delayed signal in FIG. 1.

FIG. 3 is a schematic block diagram illustrating a signal processing circuit of the present application.

FIG. 4 is a schematic simulation diagram illustrating the relationship between a third delay time to be calibrated generated by a signal processing circuit of the present application and the delay error of the third delay time to be calibrated.

FIG. 5 is a schematic block diagram illustrating a calibration circuit of the signal processing circuit according to the present application.

FIG. 6 is a schematic simulation diagram illustrating the relationship between the delay error and the delay time obtained according to FIG. 2 and FIG. 4.

FIG. 7 is a schematic block diagram illustrating another signal processing circuit of the present application.

Reference numerals used is the drawings are summarized below:

| | |
|---|---|
| 10 | Signal processing circuit |
| 101 | First window function module |
| 102 | Second window function module |
| 103 | Third window function module |
| 104 | Fourth window function module |
| 105 | Fifth window function module |
| 121 | First delay time computation module |
| 122 | Second delay time computation module |
| 123 | Third delay time computation module |
| 140 | Calibration circuit |
| 160 | Delay time calibration module |
| 20 | Signal processing circuit |
| 221 | Sixth delay time computation module |
| $S_{ref}$ | Reference signal |
| $S_{D1}$ | Delayed reference signal |
| $S_{D2}$ | Pre-determined delayed reference signal |
| $S_1$ | First converted reference signal |
| $S_2$ | First converted delayed reference signal |
| $S_3$ | Second converted pre-determined reference signal |
| $S_4$ | Fourth converted reference signal |
| $S_5$ | Fifth converted delayed reference signal |
| $T_1$ | First delay time to be calibrated |
| $T_2$ | Second delay time to be calibrated |
| $T_3$ | Third delay time to be calibrated |
| $T_K$ | Calibrated delay time |
| $\lambda$ | Gain coefficient |
| $E_{P1}$ | End-point |
| $E_{P2}$ | End-point |

## DETAILED DESCRIPTION

The following disclosure provides many different embodiments, or examples, for implementing different features of the invention. Specific examples of components and arrangements are described below to simplify the present disclosure. As could be appreciated, these are, of course, merely examples and are not intended to be limiting. For example, the formation of a first feature over or on a second feature in the description that follows may include embodiments in which the first and the second features are formed in direct contact, and may also include embodiments in which additional features may be formed between the first and the second features, such that the first and the second features may not be in direct contact. In addition, the present disclosure may repeat reference numerals and/or letters in the various examples. This repetition is for the purpose of simplicity and clarity and does not in itself dictate a relationship between the various embodiments and/or configurations discussed.

Further, spatially relative terms, such as "beneath," "below," "lower," "above," "upper," and the like, may be used herein for the ease of the description to describe one element or feature's relationship with respect to another element(s) or feature(s) as illustrated in the drawings. The spatially relative terms are intended to encompass different orientations of the device in use or operation in addition to the orientation depicted in the figures. The apparatus may be otherwise oriented (e.g., rotated by 90 degrees or at other orientations) and the spatially relative descriptors used herein may likewise be interpreted accordingly.

Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard deviation found in the respective testing measurements. Also, as used herein, the term "about" generally means within 10%, 5%, 1%, or 0.5% of a given value or range. Alternatively, the term "about" means within an acceptable standard error of the mean when considered by one of ordinary skill in the art. As could be appreciated, other than in the operating/working examples, or unless otherwise expressly specified, all of the numerical ranges, amounts, values and percentages such as those for quantities of materials, durations of times, temperatures, operating conditions, ratios of amounts, and the likes thereof disclosed herein should be understood as modified in all instances by the term "about." Accordingly, unless indicated to the contrary, the numerical parameters set forth in the present disclosure and attached claims are approximations that can vary as desired. At the very least, each numerical parameter should at least be construed considering the number of reported significant digits and by applying ordinary rounding techniques. Ranges can be expressed herein as from one endpoint to another endpoint or between two endpoints. All ranges disclosed herein are inclusive of the endpoints, unless specified otherwise.

Currently, the cross-correlation technology is commonly used to measure the delay time between two signals. Hardware for implementing the cross-correlation technology includes, for example, cross-correlation modules, peak searching modules and conversion modules for converting the tap delay into the delay time. The operations of the cross-correlation technology include, for example; the cross-correlation module first performs a cross-correlation calculation on the reference signal and the delayed signal, wherein the delayed reference signal is generated from delaying the reference signal by a delay time. Next, the peak searching module searches for the peak value of the cross-correlation result. The conversion module converts an index corresponding to the peak value into time according to a sampling frequency, thereby obtaining the above-mentioned delay time.

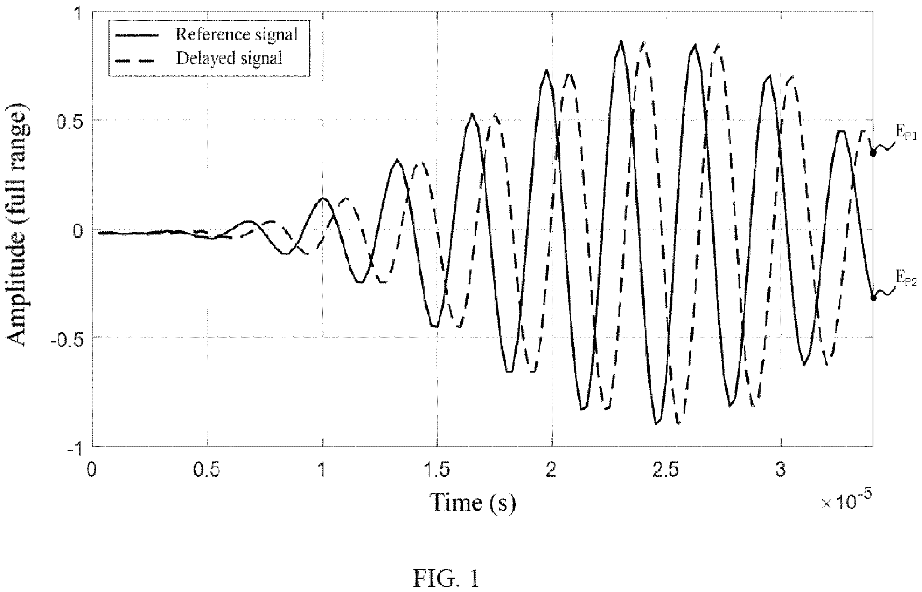

Ideally, the only difference between the reference signal and the delayed signal is the delay time therebetween. Also, since, for example, the waveform and the amplitude of the two are substantially the same, the level of the cross-correlation therebetween is relatively high. However, in real-world applications, the storage space of the memory for storing the reference signal and the delayed signal is limited because of the cost, and hence, the application of the technology is limited. Therefore, the amplitude of the end-point of the signal envelope of the reference signal and the amplitude of the end-point of the signal envelope of the delayed signal stored in the storage space may not be zero, and in some cases, the difference between the end-points of the two may be close to the peak value of the reference signal or the peak value of the delayed signal, as shown in FIG. 1.

FIG. 1 shows the waveforms in the case where the end-point of the signal envelope of the reference signal and the delayed signal is a non-zero value. The horizontal axis represents the time, and the unit is second; the vertical axis represents the amplitude, and the unit is an arbitrary unit. Referring to FIG. 1, the amplitude of the end-point $E_{P1}$ of the reference signal is a non-zero value, whereas the amplitude of the end-point $E_{P2}$ of delayed signal is a non-zero value.

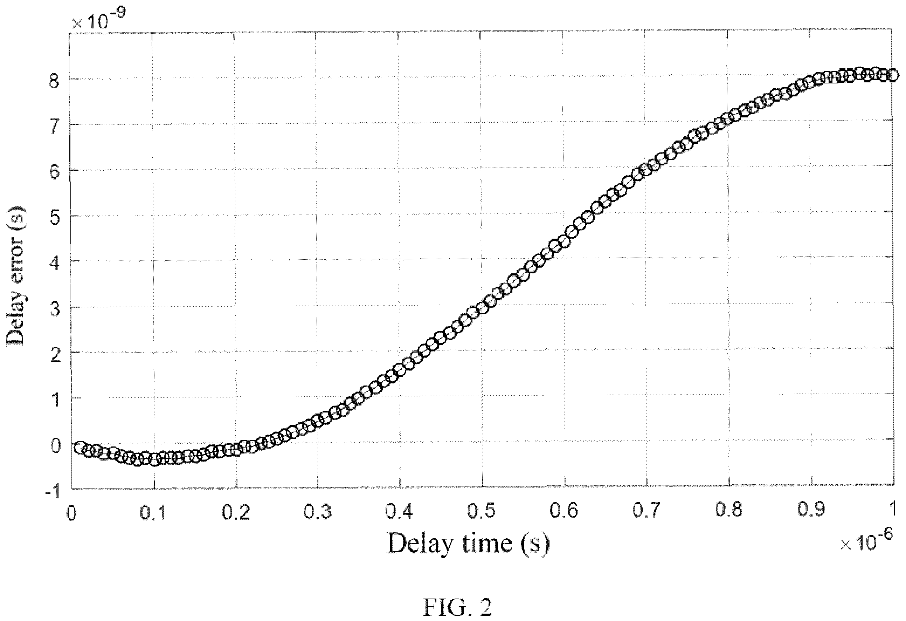

In this case, since the amplitudes of both the end-points $E_{P1}$ and $E_{P2}$ are non-zero values, the cross-correlation level between the reference signal and the delayed signal is relatively low. If a cross-correlation calculation is performed directly on such reference signal and delayed signal, the delay error of the delay time thus obtained would be very unpredictable, as shown in FIG. 2. Accordingly, the accuracy of the delay time thus obtained would be relatively low.

FIG. 2 is a schematic simulation diagram illustrating the relationship between the delay error and the delay time, wherein the delay error is obtained by performing a cross-correlation calculation directly on the reference signal and the delayed signal in FIG. 1. The vertical axis represents the delay time, and the unit is second; and the horizontal axis represents the delay error, and the unit is second. Referring to FIG. 2, the relationship between the delay error and the delay time is relatively complicated; this is because that the delay error may change depending on the amplitudes of the endpoints $E_{P1}$ and $E_{P2}$. In view of the foregoing, the accuracy of the delay time obtained by performing the cross-correlation calculation directly on the reference signal and delayed signal having an end-point with amplitude being a non-zero value is relatively low. It is difficult to obtain a delay error with a certain degree of accuracy, say, for example, about 100 picosecond (ps).

The above-mentioned issue may be solved by the following two approaches. The first approach involves increasing the storage space of the memory to store the complete reference signal and the complete delayed signal. The amplitude of the respective start-point and end-point of the complete reference signal and the complete delayed signal are close to zero. Therefore, the issue identified in FIG. 2 will not occur. As to the second approach, the number from the pulses generated by the excitation source of the ultrasonic transducer is reduced, thereby shortening the length of the reference signal and the length of the delayed signal, so that the shorten reference signal and the shorten delayed signal can be stored in the given storage space completely.

Nevertheless, increasing the storage space of the memory as prescribed by the first approach would increase not only the cost but also the operation time of the whole system, thereby causing an increase in the power consumption of the whole system. Regarding the second approach, although the length of the reference signal and the length of the delayed signal are shortened, the noise of the whole system is kept the same. Therefore, the noise-to-signal ratio of the reference signal and the noise-to-signal ratio of the delayed signal are reduced significantly, thereby causing an increase in the delay error.

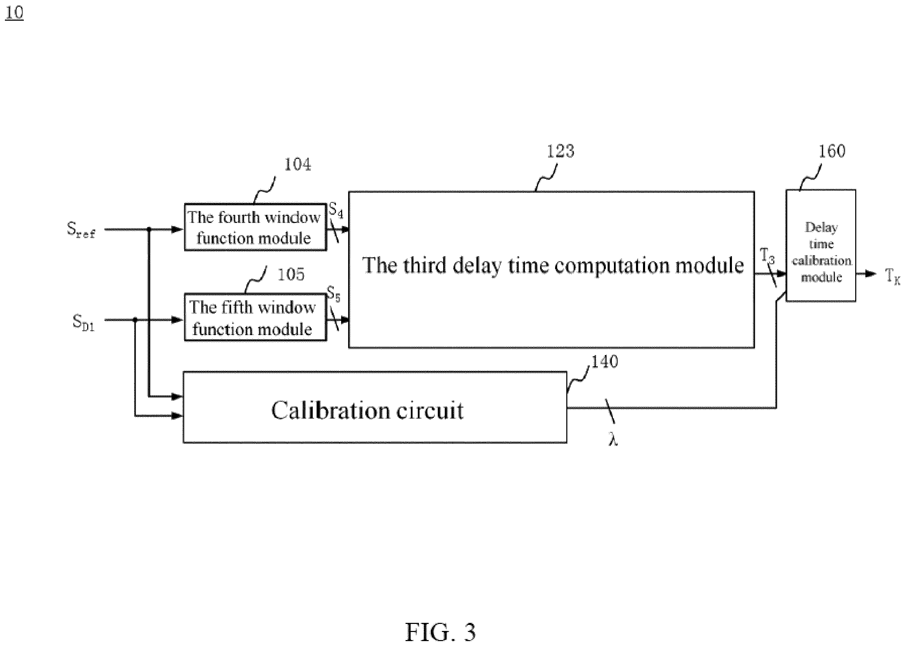

FIG. 3 is a schematic block diagram illustrating a signal processing circuit 10 of the present application. Referring to FIG. 3, the signal processing circuit 10 includes a fourth window function module 104, a fifth window function module 105, a third delay time computation module 123, a calibration circuit 140 and a delay time calibration module 160.

The fourth window function module 104 is configured to convert a reference signal $S_{ref}$ into a fourth converted reference signal $S_4$ according to a window function. In some embodiments, the window function includes a triangle window, Hann window, Hamming window, Blackman window, Blackman-Harris window, Flattopwin window, cosine window, or Gaussian window. According to the principle of the window function, the amplitudes of the start-point and end-point of the signal envelope of the fourth converted reference signal $S_4$ are close to zero.

The fifth window function module 105 is configured to convert a delayed reference signal $S_{D1}$ into a fifth converted delayed reference signal $S_5$ according to a window function. The delayed reference signal $S_{D1}$ is generate from delaying a reference signal $S_{ref}$ by a first delay time. The first delay time is the parameter that the circuit designer intends to obtain. Similarly, according to the principle of the window function, the amplitudes of the start-point and end-point of the signal envelope of the fifth converted delayed reference signal $S_5$ is close to zero. It should be noted that in the present embodiment, the fourth window function module 104 and the fifth window function module 105 are depicted as two mutually independent components; however, the present application is not limited to such number. In some embodiments, the two mutually independent components, the fourth window function module 104 and the fifth window function module 105, can be substitute with a single window function module. Alternatively, the fourth window function module 104 and the fifth window function module 105 may be implemented and substituted by more than two window function modules.

The third delay time computation module 123 is coupled to the fourth window function module 104 and the fifth window function module 105, and is configured to generate a third delay time to be calibrated $T_3$ by receiving a fourth converted reference signal $S_4$ and a fifth converted delayed reference signal $S_5$. There is a third delay error between the third delay time to be calibrated $T_3$ and the first delay time. Specifically, the third delay time computation module 123 employs the cross-correlation technology for operation. The operation of the cross-correlation technology includes, for example: first, performing a cross-correlation calculation on the fourth converted reference signal $S_4$ and the fifth converted delayed reference signal $S_5$. Then, the peak value of the cross-correlation result is searched for. The index corresponding to the peak value is converted in terms of time according to a sampling frequency, thereby obtaining the above-mentioned third delay time to be calibrated $T_3$.

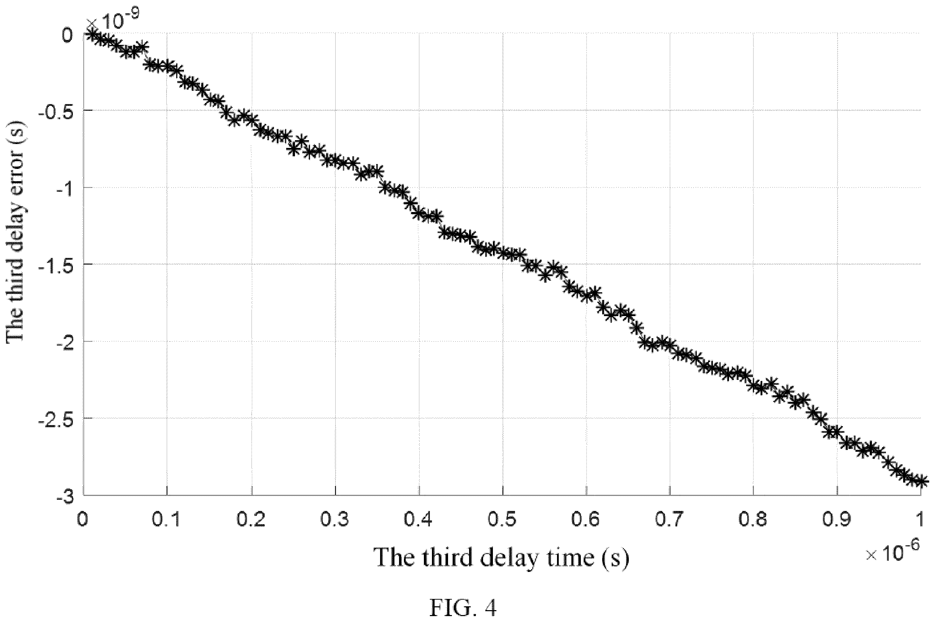

Moreover, since the third delay time to be calibrated $T_3$ is based on the window function, the linearity of the ratio of the third delay error to the third delay time to be calibrated $T_3$ is corelated the above-mentioned window function used. Specifically, according to the window function, the amplitude of the end-point corelated to the fourth converted reference signal $S_4$ and the amplitude of the end-point corelated to the fifth converted delayed reference signal $S_5$ are close to zero. Therefore, the cross-correlation level of the fourth converted reference signal $S_4$ and the fifth converted delayed reference signal $S_5$ is relatively high. The delay error of the third delay time to be calibrated $T_3$ obtained by performing the cross-correlation calculation on such fourth converted reference signal $S_4$ and the fifth converted delayed reference signal $S_5$ is more predictable, as shown in FIG. 4.

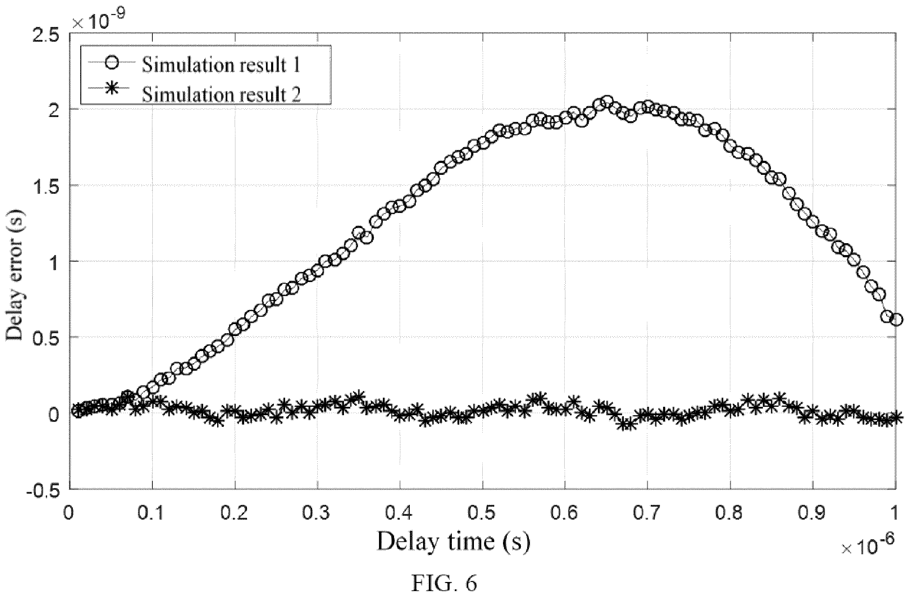

FIG. 4 is a schematic simulation diagram illustrating the relationship between a third delay time to be calibrated $T_3$ generated by a third delay time computation module 123 of a signal processing circuit 10 of the present application and the delay error of the third delay time to be calibrated $T_3$. The vertical axis represents the third delay time to be calibrated $T_3$, and the unit is second; and the horizontal axis represents the third delay error of the third delay time to be calibrated $T_3$, and the unit is second. Referring to FIG. 4, the relationship between the third delay error to the third delay time to be calibrated $T_3$ is relatively simple, compared to the relationship between the delay error and the correction delay time shown is FIG. 2. In the following description, the ratio of the delay error of the delay time to the delay time may be referred to as the "gain," when appropriate. In some embodiments, the ratio of the third delay error to the third delay time to be calibrated $T_3$ remains unchanged substantially when the third delay time to be calibrated $T_3$ changes, that is, the error gain corelated to the third delay time to be calibrated $T_3$ is close to zero. In view of the feature that the relationship between the third delay error to the third delay time to be calibrated $T_3$ is relatively simple, it is feasible to generate the gain coefficient corelated to the ratio, and then generate a calibrated delay time $T_K$ based on the third delay time to be calibrated $T_3$ and the gain coefficient thereof. The delay error of the calibrated delay time $T_K$ is kept at zero substantially or is close to zero when the calibrated delay time $T_K$ changes, see FIG. 6 for detailed discussion. In this way, the calibrated delay time $T_K$ can reflect the first delay time in a relatively precise way, regardless of the level of the delay in the first delay time. Therefore, the calibrated delay time $T_K$ has a relatively greater accuracy.

Referring back to FIG. 3, wherein the calibration circuit 140 is configured to generate a gain coefficient $\lambda$ corelated to the third delay time to be calibrated $T_3$ by receiving the reference signal $S_{ref}$ and a delayed reference signal $S_{D1}$.

The delay time calibration module 160 is coupled to the calibration circuit 140 and the third delay time computation module 123, and is configured to generate the calibrated delay time $T_K$ based on the correction coefficient $\lambda$ and the third delay time to be calibrated $T_3$. Since the relationship between the third delay error and the third delay time to be calibrated $T_3$ is relatively simple, the calibrated delay time $T_K$ can reflect the first delay time in a relatively precise way, regardless of the level of the delay in the first delay time.

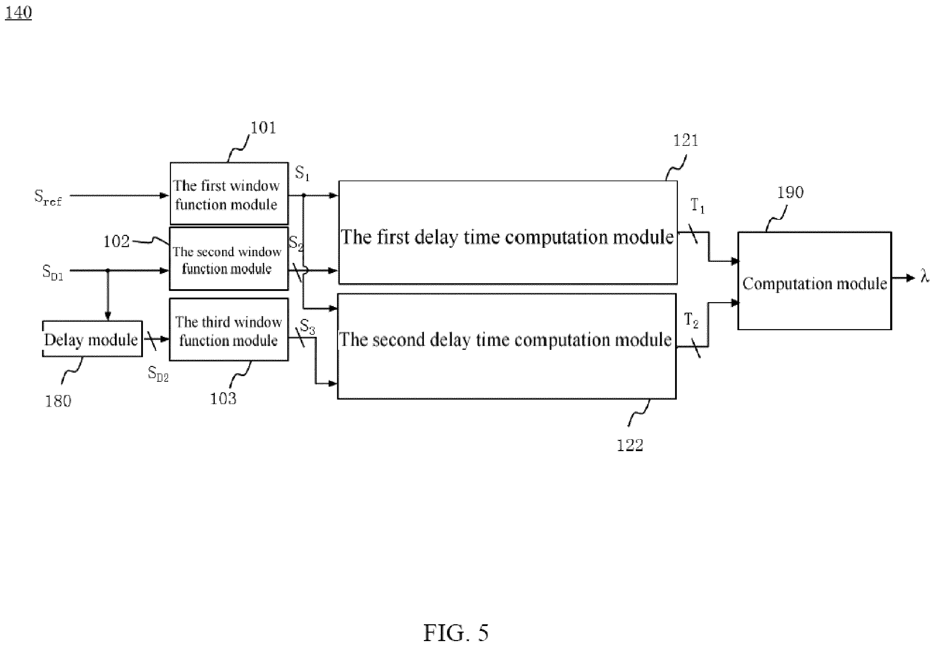

FIG. 5 is a schematic block diagram illustrating a calibration circuit 140 of the signal processing circuit 10 according to the present application. Referring to FIG. 5, the calibration circuit 140 includes a first window function module 101, a second window function module 102, a third window function module 103, a first delay time computation module 121, a second delay time computation module 122, a delay module 180, and a computation module 190.

The first window function module 101 is configured to convert a reference signal $S_{ref}$ into a first converted reference signal $S_1$ according to window function. According to the principle of the window function, the amplitudes of the start-point and the end-point of the signal envelope of the first converted reference signal $S_1$ are close to zero.

The second window function module 102 is configured to convert a delayed reference signal $S_{D1}$ into a second converted delayed reference signal $S_2$ according to a window function. According to the principle of the window function, the amplitudes of the start-point and the end-point of the signal envelope of the second converted delayed reference signal $S_2$ are close to zero.

The third window function module 103 is configured to convert a pre-determined delayed reference signal $S_{D2}$ into a third converted pre-determined delayed reference signal $S_3$ according to window function, wherein the delay module 108 adjusts the delayed reference signal $S_{D1}$ into the pre-determined delayed reference signal $S_{D2}$ based on a pre-determined second delay time. The second delay time is known, and can be determined as the circuit designer sees fit. In some embodiments, the second delay time is one or more sampling cycle.

The first delay time computation module 121 generates a first delay time to be calibrated $T_1$ by receiving the first converted reference signal $S_1$ and the second converted delayed reference signal $S_2$, wherein there is a first delay error between the first delay time to be calibrated $T_1$ and the first delay time. In some embodiments, the first delay error is substantially the same as the third delay error. The operation principles of the first delay time computation module 121 are the same as those of the third delay time computation module 123, and hence a detailed description thereof is omitted herein for the sake of brevity. Moreover, since the first delay time to be calibrated $T_1$ is based on the window function, the linearity of the ratio of the first delay error to the first delay time to be calibrated $T_1$ correlates with the window function used, and the temporal characteristics of the first delay time to be calibrated $T_1$ can reflect the temporal characteristics of the first delay time in a relatively precise way.

The second delay time computation module 122 generates a second delay time to be calibrated $T_2$ by receiving a first converted reference signal S1 and a third converted pre-determined delayed reference signal $S_3$, wherein there is a second delay error between the sum of the second delay time and the first delay time and the second delay time to be calibrated $T_2$. The operation principles of the second delay time computation module 122 are the same as those of the third delay time computation module 123, and hence a detailed description thereof is omitted herein for the sake of brevity. Moreover, since the second delay time to be calibrated $T_2$ is based on the window function, the linearity of the ratio of the second delay error to the second delay time to be calibrated $T_2$ correlates with the window function used, and the temporal characteristics of the second delay time to be calibrated $T_2$ can reflect the temporal characteristics of the sum of the first delay time and second delay time in a relatively precise way. In some embodiments, the ratio of the second delay error to the second delay time to be calibrated $T_2$ is substantially the same as the ratio of the first delay error to the first delay time to be calibrated $T_1$, and is substantially the same as the ratio of the third delay error to the third delay time to be calibrated $T_3$.

The computation module 190 is coupled to the first delay time computation module 121 and the second delay time computation module 122, and is configured to compute gain coefficient $\lambda$ based on the first delay time to be calibrated $T_1$ and the second delay time to be calibrated $T_2$. In some embodiments, the computation module 190 includes a plurality of logic calculation circuits for implementing the equation (1) below to calculate the gain coefficient $\lambda$. The gain coefficient $\lambda$ can be expressed as follows:

$$\lambda = \frac{(T_2 - T_1)}{M} \qquad (1)$$

, wherein $\lambda$ represents the gain coefficient; $T_1$ represents the first delay time to be calibrated; $T_2$ represents the second delay time to be calibrated; and M represents the second delay time.

Since the gain coefficient corelated to the first delay time to be calibrated $T_1$ is substantially a constant, and the gain coefficient corelated to the second delay time to be calibrated $T_2$ is substantially a constant, the gain coefficient $\lambda$ can be considered a constant. In this way, a difference between the first delay time to be calibrated $T_1$ and the second delay time to be calibrated $T_2$ is proportional to a second delay time M. Also, because the second delay time M is substantially a constant, the difference between the first delay time to be calibrated $T_1$ and second delay time to be calibrated $T_2$ is proportional to the gain coefficient $\lambda$.

Further, the gain coefficient $\lambda$ can also be expressed as the following equation (2):

$$\lambda = (1 + G) \qquad (2)$$

, wherein G represents a ratio of the first delay error to the first delay time to be calibrated.

Referring back to FIG. 3, wherein the delay time calibration module 160 is configured to generate a calibrated delay time $T_K$ based on the correction coefficient $\lambda$ and based on the third delay time to be calibrated $T_3$. In some embodiments, the delay time calibration module 160 includes a plurality of logic calculation circuits for implementing the following equation (3) to calculate the calibrated delay time $T_K$. The calibrated delay time $T_K$ ss expressed as follows:

$$T_K = \frac{T_1}{\lambda} \qquad (3)$$

, wherein $T_K$ represents the calibrated delay time.

In the present embodiment, each of the first delay time computation module 121 and the second delay time computation module 122 includes a cross-correlation module, coupled to the peak searching module of the cross-correlation module and coupled to the conversion module of the peak searching module.

The cross-correlation module of the first delay time computation module 121 performs a cross-correlation calculation on the first converted reference signal $S_1$ and the second converted delayed reference signal $S_2$. The cross-correlation module of the first delay time computation module 121 searches for the peak value of cross-correlation result provided by the cross-correlation module of the first delay time computation module 121. The conversion module of the first delay time computation module 121 converts the peak value of the peak searching module of the first delay time computation module 121 into the first delay time to be calibrated $T_1$.

The cross-correlation module of the second delay time computation module 122 performs a cross-correlation calculation on the first converted reference signal $S_1$ and the third converted pre-determined delayed reference signal $S_3$. The peak searching module of the second delay time computation module 122 searches for the peak value of the cross-correlation result provided by the cross-correlation module of the second delay time computation module 122. The conversion module of the second delay time computation module 122 converts the peak value provided by the peak searching module of the second delay time computation module 122 into the second delay time to be calibrated $T_2$.

FIG. 6 is a schematic simulation diagram illustrating the relationship between the delay error and the delay time obtained according to FIG. 2 and FIG. 4, wherein the simulation result 1 corresponds to the simulation result in FIG. 2; that is, the relationship between the delay error and the delay time obtained by performing a cross-correlation calculation directly on the reference signal and the delayed signal without using the window function conversion step; the simulation result 2 corresponds to the calibrated simulation result in FIG. 4; that is, the relationship between the delay error and the delay time after the window function conversion. Referring to FIG. 6, the vertical axis represents the delay time, and the unit is second; and the horizontal axis represents the delay error of the delay time, and the unit is second. As shown in FIG. 6, in simulation result 1, when the calibrated delay time $T_K$ changes, the changes in the delay error of the calibrated delay time $T_K$ is smaller, compared with the simulation result 2 that is not subject to correction; in some embodiments, in the simulation result 1, when the calibrated delay time $T_K$ changes, the delay error of the calibrated delay time $T_K$ is substantially the same or is close to zero. In this way, the calibrated delay time $T_K$ can reflect the first delay time in a relatively precise way, regardless of the level of the delay in the first delay time. Therefore, the calibrated delay time $T_K$ has a relatively higher accuracy.

In contrast, for the delay time calculated by performing the cross-correlation calculation directly on the reference signal and delayed signal, the delay error changes as the level of the amplitude of the end-point changes. Therefore, the accuracy of the delay time obtained by performing the cross-correlation calculation directly on the reference signal and delayed signal having such end-points is relatively low. It is difficult to achieve a delay error with a certain degree of accuracy, such as about 100 picoseconds.

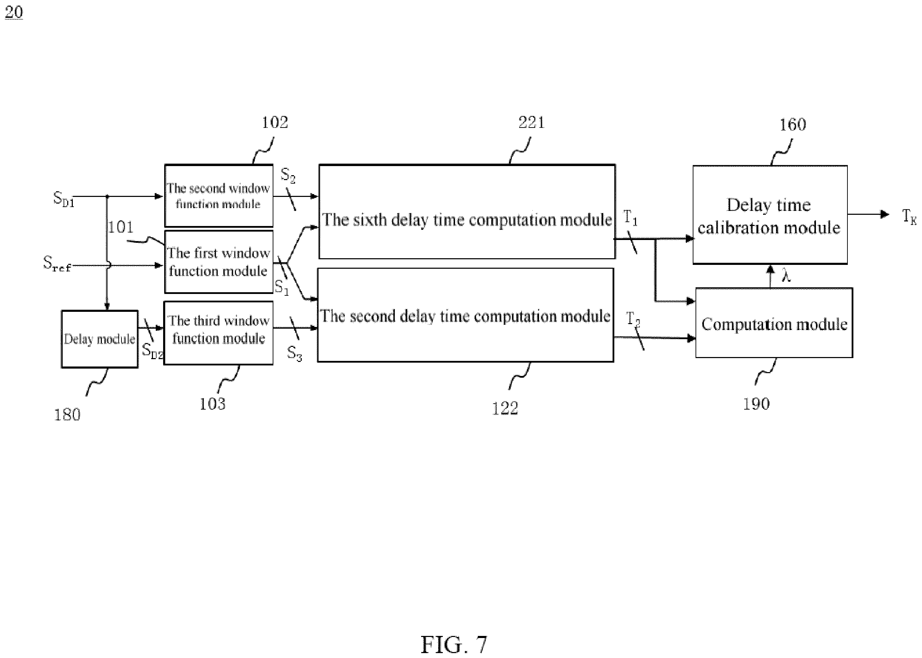

FIG. 7 is a schematic block diagram illustrating another signal processing circuit 20 of the present application. Referring to FIG. 7, the signal processing circuit 20 is obtained by integrating the blocks and circuits in the calibration circuit 140 of FIG. 5 and the signal processing circuit 10 of FIG. 3 that have the same function. After the integration, the circuit framework of the signal processing circuit 20 is similar to the circuit framework of the calibration circuit 140 in FIG. 5, except that the signal processing circuit 20 includes a sixth delay time computation module 221.

The function of the sixth delay time computation module 221 is similar to that of the first delay time computation module 121 in FIG. 5, with the exception that the sixth delay time computation module 221 provides the first delay time to be calibrated $T_1$ not only to the delay time calibration module 160 but also to the computation module 190.

In some embodiments, the above-mentioned signal processing circuit 10 can be implemented using a semiconductor process; for example, the present application further provides a chip, which includes the signal processing circuit 10, and the chip can be a semiconductor chip implemented using different process.

In some embodiments, the above-mentioned signal processing circuit 20 can be implemented using a semiconductor process, for example the present application further provides a chip, which includes the signal processing circuit 20, and the chip can be a semiconductor chip implemented using different process.

In some embodiments, the above-mentioned calibration circuit 140 can be implemented using a semiconductor process; for example, the present application further provides a chip, which includes the calibration circuit 140, and the chip can be a semiconductor chip implemented using different process.

The foregoing outlines features of several embodiments so that those skilled in the art may better understand various aspects of the present disclosure. Those skilled in the art should appreciate that they may readily use the present disclosure as a basis for designing or modifying other processes and structures for carrying out the same purposes and/or achieving the same advantages of embodiments introduced herein. Those skilled in the art should also realize that such equivalent embodiments still fall within the spirit and scope of the present disclosure, and they may make various changes, substitutions, and alterations thereto without departing from the spirit and scope of the present disclosure.

## Claims

1. A calibration circuit, configured to receive a reference signal and a delayed reference signal, and generate a gain coefficient according to the reference signal and the delayed reference signal, wherein the delayed reference signal is generated from delaying the reference signal by a first delay time, **characterized in that** the calibration circuit comprises;

   a delay module, configured to adjust the delayed reference signal into a default delayed reference signal based on a pre-determined second delay time;

   a first window function module, configured to convert the reference signal into a first converted reference signal according to a window function;

   a second window function module, configured to convert the delayed reference signal into a first converted delayed reference signal according to the window function;

   a third window function module, configured to convert the pre-determined delayed reference signal into a converted pre-determined delayed reference signal according to the window function;

   a first delay time computation module, generating a first delay time to be calibrated by receiving the first converted reference signal and the first converted delayed reference signal, wherein there is a first delay error between the first delay time to be calibrated and the first delay time;

   a second delay time computation module, generating a second delay time to be calibrated by receiving the first converted reference signal and the converted pre-determined delayed reference signal; and

   a computation module, configured to compute the gain coefficient based on the first delay time to be calibrated and the second delay time to be calibrated.

2. The calibration circuit of claim 1, wherein each of the first delay time computation module and the second delay time computation module comprises: a cross-correlation module, a peak searching module coupled to the cross-correlation module, and a conversion module coupled to the peak searching module, wherein the cross-correlation module of the first delay time computation module performs a cross-correlation calculation on the first converted reference signal and the first converted delayed reference signal, the peak searching module of the first delay time computation module searches for a peak value of a cross-correlation result provided by the cross-correlation module of the first delay time computation module, and the conversion module of the first delay time computation module converts the peak value provided by the peak searching module of the first delay time computation module into the first delay time to be calibrated, and

   wherein the cross-correlation module of the second delay time computation module performs a cross-correlation calculation on the first converted reference signal and the converted pre-determined delayed reference signal, the peak searching module of the second delay time computation module searches for a peak value of a cross-correlation result provided by the cross-correlation module of the second delay time computation module, and the conversion module of the second delay time computation module converts the peak value provided by the peak searching module of the second delay time computation module into the second delay time to be calibrated.

3. The calibration circuit of claim 1, wherein there is a second delay error between a sum of the second delay time and the first delay time and the second delay time to be calibrated.

4. The calibration circuit of claim 3, wherein a ratio of the first delay error to the first delay time to be calibrated is substantially equivalent to a ratio of the second delay error to the second delay time to be calibrated.

5. The calibration circuit of claim 1, wherein a difference between the first delay time to be calibrated and the second delay time to be calibrated is proportional to the second delay time.

6. The calibration circuit of claim 5, wherein a difference between the first delay time to be calibrated and the second delay time to be calibrated is proportional to the gain coefficient.

7. The calibration circuit of claim 6, wherein the gain coefficient is expressed as follows:

$$\lambda = \frac{T_2 - T_1}{M}$$

   , wherein $T_2$ represents the second delay time to be calibrated; $T_1$ represents the first delay time to be calibrated; $\lambda$ represents the gain coefficient; and M represents the second delay time.

8. The calibration circuit of claim 7, wherein the gain coefficient is expressed as follows:

$$\lambda = (1 + G)$$

, wherein G represents the ratio of the first delay error to the first delay time to be calibrated.

9. The calibration circuit of claim 1, wherein linearity of the ratio of the first delay error to the first delay time to be calibrated correlates with the window function.

10. The calibration circuit of claim 9, wherein the window function comprises: triangle window, Hann window, Hamming window, Blackman window, Blackman-Harris window, Flattopwin window, cosine window or Gaussian window.

11. The calibration circuit of claim 1, wherein the first delay time computation module performs a cross-correlation calculation on the first converted reference signal and the first converted delayed reference signal to generate the first delay time to be calibrated, and the second delay time computation module performs the cross-correlation calculation on the first converted reference signal and the converted pre-determined delayed reference signal to generate the second delay time to be calibrated.

12. A signal processing circuit, **characterized in that** the signal processing circuit comprises;
a calibration circuit according to any of claims 1 to 11; and
a delay time calibration module, coupled to the calibration circuit, and generating a calibrated delay time according to the first delay time to be calibrated and the gain coefficient.

13. The signal processing circuit of claim 12, wherein the calibrated delay time is expressed as follows;

$$T_K = \frac{T_1}{\lambda}$$

, wherein $T_K$ represents the calibrated delay time; $\lambda$ represents the gain coefficient; and $T_1$ represents the first delay time to be calibrated.

14. A signal processing circuit, **characterized in that**, the signal processing circuit comprises;
a fourth window function module, configured to convert the reference signal into a second converted reference signal according to the window function;
a fifth window function module, configured to convert the delayed reference signal into a second converted delayed reference signal according to the window function;
a third delay time computation module, coupled to the fourth window function module and the fifth window function module, and generating a third delay time to be calibrated by receiving the second converted reference signal and the second converted delayed reference signal, wherein there is a third delay error between the third delay time to be calibrated and the first delay time;
a calibration circuit according to any of claims 1 to 11; and
a delay time calibration module, coupled to the third delay time computation module and the calibration circuit, and generating a calibrated delay time according to the third delay time to be calibrated and the gain coefficient.

15. A chip, **characterized in that**, the chip comprises;
a calibration circuit according to any of claims 1 to 11.

16. A chip, **characterized in that**, the chip comprises;
a signal processing circuit of any of claims 12 to 14.

FIG. 1

EP 3 751 238 A1

FIG. 2

10

FIG. 3

EP 3 751 238 A1

FIG. 4

140

FIG. 5

EP 3 751 238 A1

FIG. 6

EP 3 751 238 A1

FIG. 7

EP 3 751 238 A1

## INTERNATIONAL SEARCH REPORT

| International application No. |
| --- |
| **PCT/CN2019/078254** |

| A. | CLASSIFICATION OF SUBJECT MATTER |
| --- | --- |

G01F 1/66(2006.01)i

According to International Patent Classification (IPC) or to both national classification and IPC

| B. | FIELDS SEARCHED |
| --- | --- |

Minimum documentation searched (classification system followed by classification symbols)

G01F; G10L; H01P; H04L; G01R

Documentation searched other than minimum documentation to the extent that such documents are included in the fields searched

Electronic data base consulted during the international search (name of data base and, where practicable, search terms used)

WPI, EPODOC, CNPAT, CNKI, IEEE: 校正, 校准, 延时, 时延, 窗, 互相关, 超声波, 准确, 峰值, 增益, correction, rectify, adjust, delay, time, window, cross, correlation, ultrasonic, precision, peak, gain

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 109215667 A (HUAWEI TECHNOLOGIES CO., LTD.) 15 January 2019 (2019-01-15) claim 24 | 1-16 |
| A | US 6107879 A (NIPPON TELEGRAPH & TELEPHONE CORPORATION et al.) 22 August 2000 (2000-08-22) entire document | 1-16 |
| A | CN 102075486 A (SHENZHEN ABESTECH INDUSTRY CO., LTD.) 25 May 2011 (2011-05-25) entire document | 1-16 |
| A | CN 101023614 A (POWERWAVE TECHNOLOGIES, INC.) 22 August 2007 (2007-08-22) entire document | 1-16 |
| A | CN 103454497 A (NANJING UNIVERSITY OF SCIENCE & TECHNOLOGY) 18 December 2013 (2013-12-18) entire document | 1-16 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **03 December 2019** | **13 December 2019** |

| Name and mailing address of the ISA/CN | Authorized officer |
| --- | --- |
| **China National Intellectual Property Administration (ISA/CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/078254**

| Patent document cited in search report | | | Publication date (day/month/year) | Patent family member(s) | | | Publication date (day/month/year) |
|---|---|---|---|---|---|---|---|
| CN | 109215667 | A | 15 January 2019 | TW | 201905900 | A | 01 February 2019 |
| | | | | WO | 2019001252 | A1 | 03 January 2019 |
| US | 6107879 | A | 22 August 2000 | JP | H10173455 | A | 26 June 1998 |
| | | | | EP | 0944166 | A1 | 22 September 1999 |
| | | | | WO | 9825340 | A1 | 11 June 1998 |
| CN | 102075486 | A | 25 May 2011 | | None | | |
| CN | 101023614 | A | 22 August 2007 | IN | 200700553 | P4 | 24 August 2007 |
| | | | | US | 2006008026 | A1 | 12 January 2006 |
| | | | | EP | 1774687 | A1 | 18 April 2007 |
| | | | | WO | 2006017126 | A1 | 16 February 2006 |
| CN | 103454497 | A | 18 December 2013 | | None | | |

Form PCT/ISA/210 (patent family annex) (January 2015)